# EUROPÄISCHE PATENTSCHRIFT

(11) **EP 3 545 050 B1**
(45) Veröffentlichungstag und Bekanntmachung des Hinweises auf die Patenterteilung: **03.01.2024**
(21) Anmeldenummer: 17801394.2
(22) Anmeldetag: 09.11.2017
(51) Int. Cl.: C09K 11/01, H01J 9/52, C09K 11/61, C09K 11/66, C09K 11/77

(54) **LEUCHTSTOFFMISCHUNG AUS LÖSLICHEN UND UNLÖSLICHEN LEUCHTSTOFFEN UND VERFAHREN ZUR RÜCKGEWINNUNG DER LEUCHTSTOFFE**
LUMINOPHORE MIXTURE COMPOSED OF SOLUBLE AND INSOLUBLE LUMINOPHORES, AND PROCESS FOR RECLAIMING THE LUMINOPHORES
MÉLANGE DE SUBSTANCES LUMINESCENTES COMPOSÉ DE SUBSTANCES LUMINESCENTES SOLUBLES ET NON SOLUBLES ET PROCÉDÉ POUR RÉCUPÉRER LES SUBSTANCES LUMINESCENTES

(30) Priorität: 28.11.2016 DE 102016223566
(43) Veröffentlichungstag der Anmeldung: 02.10.2019
(73) Patentinhaber: Fraunhofer-Gesellschaft zur Förderung der angewandten Forschung e.V., 80686 München (DE); Technische Universität Darmstadt, 64289 Darmstadt (DE)
(72) Erfinder: ZIMMERMANN, Jörg, 64572 Büttelborn (DE); VON SEGGERN, Heinz, 64625 Bensheim (DE)
(74) Vertreter: Pfenning, Meinig & Partner mbB
(86) Internationale Anmeldenummer: PCT/EP2017/078763
(87) Internationale Veröffentlichungsnummer: WO 2018/095740

(56) Entgegenhaltungen:
- EP-A1- 0 820 069
- WO-A1-2016/065433
- FR-A1- 2 970 709
- GB-A- 1 501 267

## Beschreibung

Die vorliegende Erfindung betrifft eine Leuchtstoffmischung enthaltend mindestens einen löslichen und mindestens einen unlöslichen Leuchtstoff sowie ein Verfahren, mit dem der mindestens eine lösliche oder der mindestens eine unlösliche Leuchtstoff zurückgewonnen werden kann. Außerdem bezieht sich die Erfindung auf eine Lampe mit einer Leuchtschicht, welche die Leuchtstoffmischung enthält.

Für das Recycling von Leuchtstofflampen sind bereits verschiedene Verfahren aus dem Stand der Technik bekannt. Diese Verfahren widmen sich jedoch hauptsächlich der Rückgewinnung von Metall- und Glasbestandteilen.

Das Kapp-Trenn-Verfahren, das 1981 von der Firma OSRAM erfunden wurde, eignet sich für stabförmige Leuchtstofflampen. In einem ersten Schritt wird dabei die unter Unterdruck stehende Leuchtstofflampe mittels eines Lochbrenners belüftet. Anschließend werden die Enden der stabförmigen Leuchtstofflampen abgetrennt und die enthaltenen Metall- und Bleiglasbestandteile separiert. Aus der verbleibenden Glasröhre wird die quecksilberhaltige Leuchtstoffmischung geblasen und mittels Zyklon in staubdichte Behältnisse abgeschieden. Während das Glas mittels eines Brechers zerkleinert und von letzten Metallresten befreit wird, so dass es bei der Produktion neuer Lampen eingesetzt werden kann, ist eine unmittelbare Wiederverwendbarkeit der Leuchtstoffmischung aufgrund der Quecksilberkontamination nicht gegeben. GB1501267 beschreibt Leuchtstoffmischungen mit Halophosphaten.

Die Schritte, die zur Rückgewinnung der Leuchtstoffe aus der quecksilberhaltigen Leuchtstoffmischung in bisher bekannten Verfahren nötig sind, sind so aufwendig, dass die Leuchtstoffmischung häufig dem Sonderabfall zugeführt wird. Die DE 199 18 793 A2 beschreibt beispielsweise ein Verfahren zum Recycling von Dreibandenleuchtstoffen, bei dem in einer ersten Stufe Quecksilber und Phosphatleuchtstoffe mittels Mineralsäure aus der quecksilberhaltigen Leuchtstoffmischung herausgelöst werden. In der zweiten Stufe wird das Seltenerdleuchtstoffgemisch mit einer Carbonatlauge behandelt, wobei Yttrium/Europium-Oxid unter Komplexbildung selektiv in Lösung geht. Die unlöslichen Leuchtstoffkomponenten werden dann mit verdünnter Mineralsäure gewaschen. Durch anschließendes Kalzinieren und Glühen liegen dann zwar wiedereinsetzbare Luminophore vor, jedoch müssen bei diesem Verfahren große Mengen an ätzenden Chemikalien aufgewendet werden.

Noch aufwendiger sind Verfahren wie in der DE 10 2011 007 669 A1, der EP 2363873 A1 oder der US 7976798 B2, in denen die seltenen Erden an sich aus der quecksilberhaltigen Leuchtstoffmischung isoliert werden. Hierzu müssen mehrere Trennschritte durchgeführt werden. Dabei wird die Leuchtstoffmischung zunächst in Salzsäure oder Schwefelsäure bei sehr niedrigen pH-Werten extrahiert. Im Anschluss werden verschiedene saure oder basische Aufschlüsse vorgenommen, um schwerlösliche seltenerdmetallhaltige Komponenten abzutrennen.

Die US 2012/0152062 A1 stellt eine Alternative zu den Verfahren dar, die auf sauren und alkalischen Aufschlüssen basieren. Bei dieser wird der Leuchtstoff zuerst in einem geschmolzenen Salz halogeniert, um mindestens einen darin enthaltenen Seltenerd-Bestandteil in ein lösliches Seltenerdhalogenid umzuwandeln. Das Seltenerdhalogenid in dem geschmolzenen Salz kann dann reduziert werden, um das Seltenerdhalogenid in ein Seltenerdelement in seinem elementaren Zustand umzuwandeln. WO 2016/065433 stellt auch ein Verfahren dar um Leuchtstoffe herzustellen.

Die Leuchtstoffmischungen, die mit Hilfe der vorgenannten Verfahren recyclet werden können, sind Halophosphate und Dreibandenleuchtstoffe. Dreibandenleuchtstoffe sind Gemische aus Rot- Grün- und Blauleuchtstoffen, die Seltenerdelemente im Wirtsgitter oder als Aktivatoren enthalten. Als Rotkomponente wird häufig Europium dotiertes Yttriumoxid (Y2O3:Eu) oder Europium dotiertes Yttriumvanadiumoxid (YVO₄:Eu³⁺) verwendet. Für die Grün- und Blaukomponente wird vorzugsweise Terbium dotiertes Cermagnesiumaluminat (CAT), Europium dotiertes Bariummagnesiumaluminat (BAM) oder mit Cer und Terbium dotiertes Lanthanphosphat (LAP) eingesetzt.

Ausgehend von den Leuchtstoffmischungen aus dem Stand der Technik war es Aufgabe der vorliegenden Erfindung, Leuchtstoffmischungen bereitzustellen, die sich im Gegensatz zu den etablierten Leuchtstoffmischungen einfacher recyclen lassen. Gleichzeitig sollte ein Verfahren zur Rückgewinnung der darin enthaltenen Leuchtstoffe angegeben werden. Dieses sollte ohne ätzende Chemikalien wie Mineralsäuren und Kali- oder Natronlaugen auskommen. Des Weiteren sollten keine Chemikalien verwendet werden, deren Entsorgung aufwendig ist. Die Leuchtstoffe sollten zudem in einer Form zurückgewonnen werden, die sich zur Verwendung bei der Produktion neuer Leuchtstoffmischungen und Leuchtstofflampen eignet. Ebenso sollen Lampen basierend auf Leuchtstoffschichten mit leicht recyclebaren Leuchtstoffmischungen bereitgestellt werden.

Gelöst wird die erfindungsgemäße Aufgabe durch die Leuchtstoffmischung gemäß Patentanspruch 1 sowie das Verfahren gemäß Patentanspruch 12 und die Lampe gemäß Patentanspruch 16. Die weiteren abhängigen Ansprüche führen bevorzugte Ausführungsformen auf.

Die Leuchtstoffmischung enthält mindestens einen löslichen, anorganischen Leuchtstoff enthaltend ein Wirtsgitter und mindestens einen Aktivator und mindestens einen unlöslichen Leuchtstoff, wobei die Löslichkeit des mindestens einen löslichen Leuchtstoffs mindestens um einen Faktor 100 größer ist als die Löslichkeit des mindestens einen unlöslichen Leuchtstoffes in einem polar-protischen oder einem polar-aprotischen Lösungsmittel mit einem Dipolmoment von mindestens 3,0·10⁻³⁰ Cm, wobei die Löslichkeit dem Quotient aus Masse des Leuchtstoffes und Volumen des Lösungsmittels entspricht und wobei das Wirtsgitter aus der Gruppe bestehend aus NaCl, NaBr, Nal, KCI, KBr, Kl, RbCl, RbBr, Rbl, CsCl, CsBr, Csl, BaCl₂, BaBr₂, Bal₂, SrCl₂, SrBr₂, Srl₂, CaCl₂, CaBr₂,Cal₂, MgCl₂, MgBr₂, Mgl₂ und Mischungen hiervon ausgewählt ist.

Der Unterschied der Löslichkeit um den Faktor 100 stellt dabei ein Auswahlkriterium für die einzusetzenden Leuchtstoffe sowie Lösungsmittel dar.

Vorzugsweise besteht die Leuchtstoffmischung aus mindestens einem löslichen Leuchtstoff enthaltend ein Wirtsgitter und einen Aktivator und mindestens einem unlöslichen Leuchtstoff, wobei die Löslichkeit des mindestens einen löslichen Leuchtstoffs mindestens um einen Faktor 100 größer ist als die Löslichkeit des mindestens einen unlöslichen Leuchtstoffes und wobei sich die Löslichkeit auf ein polares, flüssiges Lösungsmittel bezieht.

Durch die hohe Löslichkeit des mindestens einen Leuchtstoffes wird gewährleistet, dass die erfolgreiche Rückgewinnung unabhängig von der Mikrostruktur der Leuchtstoffmischung ist. Es ist unerheblich, ob in der Leuchtstoffmischung Agglomerate von verschiedenen Leuchtstoffkristalliten vorliegen oder ob die Partikel beispielsweise so ungleichmäßig verteilt sind, dass die unlöslichen Leuchtstoffe vollkommen von den löslichen Leuchtstoffen umgeben sind. Durch Zugabe des polaren, flüssigen Lösungsmittels ist es in jedem Fall möglich aus der Leuchtstoffmischung eine Fraktion mit löslichen und eine Fraktion mit unlöslichen Leuchtstoffen zu erhalten.

Die löslichen und unlöslichen Leuchtstoffe können dabei beliebig kombiniert werden. Es ist vorteilhaft, diese so auszuwählen, dass eine Leuchtstoffmischung mit dem gewünschten Emissionsspektrum entsteht.

Die genannten Alkali- und Erdalkalihalogenide sind als Wirtsgitter besonders bevorzugt, da sie kostengünstig sind und gleichzeitig sehr hohe Löslichkeiten, z.B. in Wasser, aufweisen.

Vorteilhaft ist, wenn die Leuchtstoffmischung dadurch gekennzeichnet ist, dass der Aktivator eine Dotierung des Wirtsgitters ist, wobei das Dotierelement bevorzugt ausgewählt ist aus der Gruppe bestehend aus Seltenerdmetallen, Übergangsmetallen, Metallen aus der 3., 4. und 5. Hauptgruppe des Periodensystems und Mischungen hiervon.

Alternativ kann der Aktivator ein Defekt oder eine nicht gezielt herbeigeführte Verunreinigung des Wirtsgitters sein.

Eine besonders bevorzugte Ausführungsform ist die Dotierung als Aktivator. Mit Übergangs- oder Seltenerdmetallen dotierte Erdalkalihalogenide weisen im trockenen Zustand unter UV-Anregung Lumineszenz mit einer sehr hohen Emissionsintensität auf und sind einfach herzustellen.

Außerdem lässt sich die Emissionsfarbe des löslichen Leuchtstoffes beeinflussen. Das Emissionsspektrum kann entweder durch Kombination von zwei oder mehreren Dotierelementen oder durch Variation der Zusammensetzung des Wirtsmaterials eingestellt werden. Bei der Modifikation müssen eventuell Effizienzverluste in Kauf genommen werden.

Es ist ebenfalls bevorzugt, dass der mindestens eine unlösliche Leuchtstoff aus der Gruppe bestehend aus organischen, oder metall-organischen Leuchtstoffen, dotierten Oxiden, Sulfiden, Silikaten, Seleniden, Aluminaten, Phosphaten, Sulfaten, Nitriden, Halogeniden und Mischungen hiervon, insbesondere dotiertem BaO, Al₂O₃, MgO, ZnO, Y₂O₃, Y₂SiO, (Ca,Sr,Ba)Si₂N₂O₂, (Y,Gd)BO₃, SrB₄O₇, LaAlO₃, Y₃Al₅O₁₂ (YAG), Lu₃Al₅O₁₂ (LuAG), Tb₃Al₅O₁₂, GdMgB₅O₁₀, SrAl₁₂O₁₉, YAl₃B₄O₁₂, ZnGa₂O₄, Y(V,P)O₄, Y₂O₂S, ZnS, CaS, CdS, Zn₂SiO₄, (Ca,Sr,Ba)₂SiO₄, BaSi₂O₅, ZnSe, SrAl₂O₄, BaAl₂O₄, BaMgAl₁₀O₁₇ (BAM), (Ce,Tb)MgAl₁₁O₁₉, Sr₄Al₁₄O₂₅, (Ca,Sr)₅(PO₄)₃(F,Cl), (Ca,Sr,Mg)₃(PO₄)₂, Zn(PO₄)₂, LaPO₄, Sr₂P₂O₇, (Ca,Sr)AlSiN₃, (Ca,Sr,Ba)₂Si₅N₈, KMgF₃, KSiF₆, Mg₄GeO_{5,5}F, BaFCl, BaFBr, YOCl, YOBr, YOF, LaOBr und Mischungen hiervon, ausgewählt ist.

Ferner ist das Lösungsmittel in der oben beschriebenen Leuchtstoffmischung bevorzugt ausgewählt aus der Gruppe bestehend aus Wasser, C1-C6-Alkoholen, primären C1-C6 -Aminen und sekundären C2-C6-Aminen, primären C1-C6-Amiden und sekundären C2-C6-Amiden, fünf- bis achtgliedrigen Lactamen, fünf- bis achtgliedrigen Lactonen, Sulfoxiden, Sulfonen, Harnstoffderivaten, besonders bevorzugt ist das Lösungsmittel ein Lösungsmittel mit einem pH-Wert von 6 bis 8, insbesondere ein Lösungsmittel ausgewählt aus der Gruppe bestehend aus Wasser, Ethanol und Propanol und deren Mischungen.

Bevorzugt weist der unlösliche Leuchtstoff in der Leuchtstoffmischung eine Quantenausbeute von mindestens 10 % im Bereich des sichtbaren Lichts, insbesondere im Bereich von Licht der Wellenlänge von 380 nm bis 780 nm, auf.

Der mindestens eine lösliche Leuchtstoff und der mindestens eine unlösliche Leuchtstoff in der Leuchtstoffmischung sind bevorzugt durch Photonen, besonders bevorzugt durch Photonen der Energie von 2,5 bis 1000 eV, zur Emission von Licht, besonders bevorzugt zur Emission von Licht im sichtbaren Bereich des Spektrums mit einer Wellenlänge von 380 nm bis 780 nm, anregbar.

Es ist außerdem von Vorteil, wenn die Löslichkeit des mindestens einen löslichen Leuchtstoffes in der Leuchtstoffmischung mindestens um einen Faktor 150, bevorzugt mindestens um einen Faktor 300, besonders bevorzugt mindestens um einen Faktor 500, größer ist als die Löslichkeit des mindestens einen unlöslichen Leuchtstoffes in demselben Lösungsmittel.

Es ist bevorzugt, dass Lösungsmittel ein Dipolmoment von mindestens 4,0·10⁻³⁰ Cm, besonders bevorzugt von mindestens 5,0·10⁻³⁰ Cm aufweist.

In einer Variante der Erfindung kann der lösliche Leuchtstoff in der Leuchtstoffmischung als Matrix für den mindestens einen unlöslichen Leuchtstoff dienen.

Der unlösliche Leuchtstoff ist dann vollkommen in den löslichen Leuchtstoff eingebettet bzw. von ihm umschlossen.

In einer weiteren Variante stellt der mindestens eine lösliche Leuchtstoff der Leuchtstoffmischung eine Barriere und/oder einen Schutz gegenüber Oxidation und Diffusion für den mindestens einen unlöslichen Leuchtstoff dar.

Das Verfahren zur Rückgewinnung des mindestens einen löslichen oder unlöslichen Leuchtstoffes aus der Leuchtstoffmischung nach einem der Ansprüche 1 bis 8 umfasst die folgenden Verfahrensschritte:
a) Herstellen einer Dispersion aus der Leuchtstoffmischung und dem Lösungsmittel;
b) Trennen der Dispersion in zwei Fraktionen bestehend aus einer den mindestens einen löslichen Leuchtstoff enthaltenden flüssigen Phase und einer den mindestens einen unlöslichen Leuchtstoff enthaltenden festen Phase durch ein mechanisches Trennverfahren.

Bevorzugt ist, dass das mechanische Trennverfahren ausgewählt ist aus Filtration, Sedimentation, Zentrifugation und Kombinationen hiervon.

Des Weiteren ist es von Vorteil, wenn der mindestens eine lösliche Leuchtstoff in einem weiteren, nachgelagerten Verfahrensschritt c1) entweder durch Einengen der Lösung oder durch Ausfällen als feste Phase zurückgewonnen wird und gegebenenfalls durch thermische Nachbehandlung bei einer Temperatur von 50 bis 1500°C pulverförmig mit einer Reinheit von > 99%, bevorzugt > 99,5%, besonders bevorzugt 99,7%, zurückgewonnen wird.

Alternativ kann der mindestens eine unlösliche Leuchtstoff in einem weiteren, nachgelagerten Verfahrensschritt c2) durch Trocknen und/oder durch thermische Nachbehandlung bei einer Temperatur von 50 bis 1500°C pulverförmig mit einer Reinheit von > 99%, bevorzugt > 99,5%, besonders bevorzugt 99,7%, zurückgewonnen werden.

Außerdem besteht die Erfindung in einer Lampe mit einer Leuchtschicht enthaltend die zuvor beschriebene Leuchtstoffmischung.

Die Lampe ist bevorzugt eine Glühlampe, eine Halogenlampe, eine LED-Lampe, eine Leuchtstoffröhre, eine Kompaktleuchtstofflampe, eine Energiesparlampe, oder eine Gasentladungslampe, insbesondere zur Anwendung in der Leuchtmittelindustrie, im medizinischen Bereich, in Solarien, in Datenerfassungsgeräten, zur Bildwiedergabe und in Gewächshäusern.

Die nachfolgenden Figuren beziehen sich auf beispielhafte Leuchtstoffe und sollen zur Erläuterung der erfindungsgemäßen Leuchtstoffmischung dienen, ohne die Leuchtstoffmischung auf eine Mischung aus diesen Leuchtstoffen einzuschränken.

Die Herstellung von Leuchtstoffen auf Basis von Cal₂ als Wirtsgitter erfolgt unter Luftausschluss. Zunächst wurde trockenes Pulver oder Granulat von reinen Erdalkaliiodiden oder Mischungen unterschiedlicher Erdalkaliiodide in einer Handschuhbox mit einem oder mehreren reinen Metallen (Zn, Yb, Sn) bzw. einem oder mehreren Jodiden (Ybl₂, ZnI₂, Cul, EuI₂) vermischt und anschließend in eine Quarzampulle gefüllt. Die Ampulle wurde unter leichtem Unterdruck zugeschmolzen und dann in einem gestuften Heizprogramm auf mindestens 1100°C erhitzt. Die spektralen Untersuchungen erfolgten an Schmelzproben in der Ampulle oder an Proben, die in der Handschuhbox gemahlen und in eine geschlossene Küvette überführt wurden.

Folgende Leuchtstoffgemische ergeben dabei in Abhängigkeit von dem Mischungsverhältnis weißes Licht:
1. Cal₂:Yb (blau), LaPO₄:Tb (grün), Y₂O₃:Eu (rot)
2. Cal₂:Zn (gelb), BaMgAl₁₀O₁₇:Eu (blau), Y₂O₃:Eu (rot)
3. Cal₂:Sn (grün), α-Sr₂P₂O₇:Sn (blau), MgSr₅(PO₄)₄:Sn (rot)
4. Cal₂:Eu (blau), Cal₂:Zn (gelb), Y₂O₃:Eu (rot)

Die Cal₂-basierten Materialien sind stark wasserlöslich und stellen einen löslichen anorganischen Leuchtstoff im Sinne der erfindungsgemäßen Leuchtstoffmischung dar.

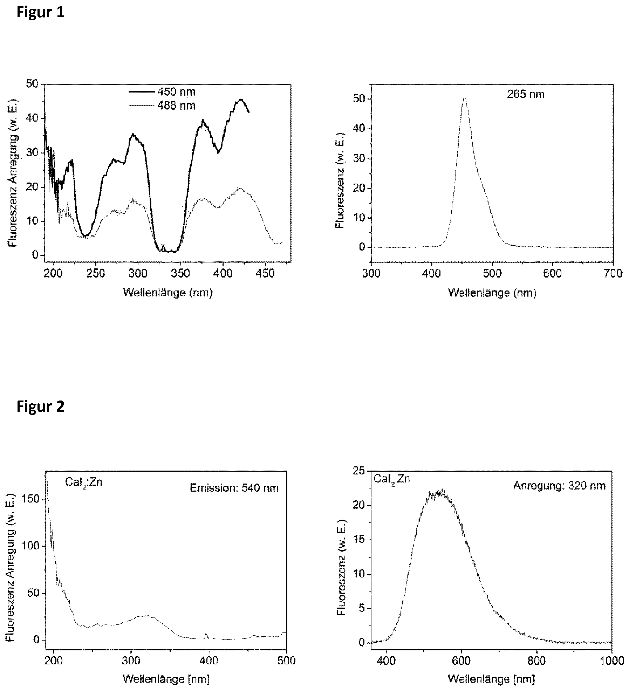

Figur 1 zeigt, dass Ytterbium dotiertes Cal₂ einen großen Anregungswellenlängenbereich von etwa 200 nm bis etwa 450 nm aufweist und nach Anregung in diesem Bereich mit einem Maximum bei 450 nm emittiert. Dieses Material ist daher gut als wasserlöslicher blauer Leuchtstoff geeignet.

Figur 2 zeigt ein Spektrum von Zink dotiertem Cal₂. Die Anregung dieses Leuchtstoffes führt zur Emission im gelben Bereich mit einer breiten Bande, die sich vom blauen bis in den roten Bereich erstreckt. Die optimale Anregungswellenlänge liegt bei 310 nm. Das gesamte Anregungsspektrum zieht sich in den UVC-Bereich mit einem weiteren Maximum bei 250 nm, welches sich gut mit der Hauptlinie des Quecksilberspektrums deckt.

Figur 3 zeigt einen Graph, in dem einerseits das Emissionsspektrum des reinen CaI₂ und andererseits das Emissionsspektrum einer Mischung aus 90 % CaI₂ und 10 % Mgl₂ eingetragen sind. Als Dotierelement wurde in beiden Fällen Zink verwendet.

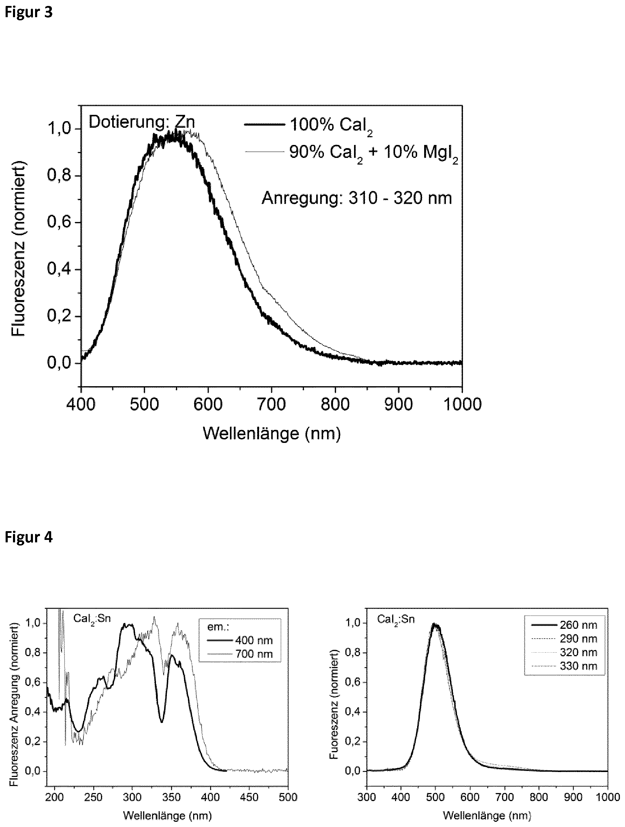

Bei Dotierung von Cal₂ mit Zinn erhält man unter UV-Anregung grüne Emission mit einem Maximum bei 500 nm. Bei etwa 700 nm ist eine schwache Bande erkennbar. In Figur 4 sind zwei Anregungsspektren für zwei möglichst weit voneinander entfernte Emissionswellenlängen im Emissionsspektrum gewählt, um den Unterschied der beiden Anregungsspektren für die dominierende Bande bei 500 nm und die sehr kleine Bande bei 700 nm zu verdeutlichen. Die Anregung zu dieser Emissionsbande ähnelt der Anregung für die Bande bei 500 nm, jedoch ist eine deutliche Verschiebung zu erkennen. Dies kann auf unterschiedliche Gitterumgebungen der Zinnionen oder auf Störungen in der Gitterstruktur zurückzuführen sein. An den Emissionsspektren, die bei unterschiedlicher Anregung aufgenommen wurden, wird deutlich, dass sich die Emissionsbande im grünen Spektralbereich über einen Wellenlängenbereich von ca. 240 nm bis 370 nm anregen lässt.

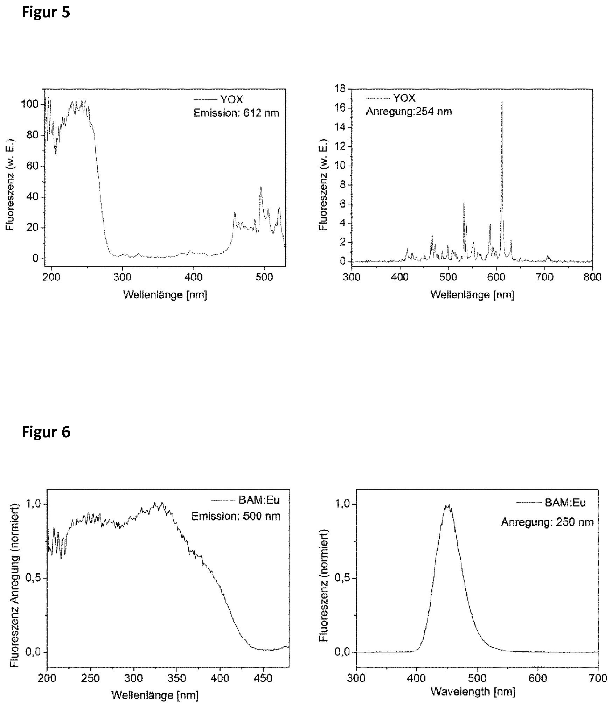

In Figur 5 ist das Anregungsspektrum (links) und das Emissionsspektrum (rechts) des roten Leuchtstoffs Y₂O₃:Eu³⁺ (YOX) dar.

Figur 6 zeigt die Spektren des blauen Leuchtstoffs BaMgAl₁₀O₁₇Eu²⁺ (BAM).

## Patentansprüche

1. Leuchtstoffmischung enthaltend
• mindestens einen löslichen, anorganischen Leuchtstoff enthaltend ein Wirtsgitter und mindestens einen Aktivator und mindestens einen unlöslichen Leuchtstoff, wobei der mindestens eine unlösliche Leuchtstoff ausgewählt ist aus der Gruppe bestehend aus organischen oder metallorganischen Leuchtstoffen, dotierten Oxiden, Sulfiden, Silikaten, Seleniden, Aluminaten, Phosphaten, Sulfaten, Nitriden, Halogeniden und Mischungen hiervon, insbesondere dotiertem BaO, Al₂O₃, MgO, ZnO, Y₂O₃, Y₂SiO, (Ca,Sr,Ba)Si₂N₂O₂, (Y,Gd)BO₃, SrB₄O₇, LaAlO₃, Y₃Al₅O₁₂ (YAG), L_{U3}Al₅O₁₂ (LuAG), Tb₃Al₅O₁₂, GdMgB₅O₁₀, SrAl₁₂O₁₉, YAl₃B₄O₁₂, ZnGa₂O₄, Y(V,P)O₄, Y₂O₂S, ZnS, CaS, CdS, Zn₂SiO₄, (Ca,Sr,Ba)₂SiO₄, BaSi₂O₅, ZnSe, SrAl₂O₄, BaAl₂O₄, BaMgAl₁₀O₁₇ (BAM), (Ce,Tb)MgAl₁₁O₁₉, Sr₄Al₄O₂₅, (Ca,Sr)₅(PO₄)₃(F,Cl), (Ca,Sr,Mg)₃(PO₄)₂, Zn(PO₄)₂, LaPO₄, Sr₂P₂O₇, (Ca,Sr)AlSiN₃, (Ca,Sr,Ba)₂Si₅N₈, KMgF₃, KSiF₆, Mg₄GeO_{5,5}F, BaFCl, BaFBr, YOCl, YOBr, YOF, LaOBr und Mischungen hiervon,
wobei die Löslichkeit des mindestens einen löslichen Leuchtstoffs mindestens um einen Faktor 100 größer ist als die Löslichkeit des mindestens einen unlöslichen Leuchtstoffes in einem polar-protischen oder einem polar-aprotischen Lösungsmittel mit einem Dipolmoment von mindestens 3,0·10⁻³⁰ Cm,
wobei die Löslichkeit dem Quotient aus Masse des Leuchtstoffes und Volumen des Lösungsmittels entspricht und
wobei das Wirtsgitter ausgewählt ist aus der Gruppe bestehend aus NaCl, NaBr, Nal, KCI, KBr, Kl, RbCl, RbBr, RbI, CsCl, CsBr, CsI, BaCl₂, BaBr₂, Bal₂, SrCl₂, SrBr₂, SrI₂, CaCl₂, CaBr₂,Cal₂, MgCl₂, MgBr₂, MgI₂ und Mischungen hiervon.

2. Leuchtstoffmischung nach einem der vorhergehenden Ansprüche, **dadurch gekennzeichnet, dass** der Aktivator eine Dotierung des Wirtsgitters ist, wobei das Dotierelement bevorzugt ausgewählt ist aus der Gruppe bestehend aus Seltenerdmetallen, Übergangsmetallen, Metallen aus der 3., 4. und 5. Hauptgruppe des Periodensystems und Mischungen hiervon.

3. Leuchtstoffmischung nach einem der vorhergehenden Ansprüche,
**dadurch gekennzeichnet, dass** das Lösungsmittel ausgewählt ist aus der Gruppe bestehend aus Wasser, C1-C6-Alkoholen, primären C1-C6 - Aminen und sekundären C2-C6-Aminen, primären C1-C6-Amiden und sekundären C2-C6-Amiden, fünf- bis achtgliedrigen Lactamen, fünf- bis achtgliedrigen Lactonen, Sulfoxiden, Sulfonen, Harnstoffderivaten, bevorzugt einen pH-Wert von 6 bis 8 aufweist,
besonders bevorzugt ausgewählt ist aus der Gruppe bestehend aus Wasser, Ethanol und Propanol und deren Mischungen.

4. Leuchtstoffmischung nach einem der vorhergehenden Ansprüche,
**dadurch gekennzeichnet, dass** der unlösliche Leuchtstoff im Bereich des sichtbaren Lichts, insbesondere im Bereich von Licht der Wellenlänge von 380 nm bis 780 nm, eine Quantenausbeute von mindestens 10 % aufweist.

5. Leuchtstoffmischung nach einem der vorhergehenden Ansprüche,
**dadurch gekennzeichnet, dass** der mindestens eine lösliche Leuchtstoff und der mindestens eine unlösliche Leuchtstoff durch Photonen, bevorzugt durch Photonen der Energie von 2,5 bis 1000 eV, zur Emission von Licht, bevorzugt zur Emission von Licht im sichtbaren Bereich des Spektrums mit einer Wellenlänge von 380 nm bis 780 nm, anregbar sind.

6. Leuchtstoffmischung nach einem der vorhergehenden Ansprüche,
**dadurch gekennzeichnet, dass** die Löslichkeit des mindestens einen löslichen Leuchtstoffes mindestens um einen Faktor 150, bevorzugt mindestens um einen Faktor 300, besonders bevorzugt mindestens um einen Faktor 500 größer ist als die Löslichkeit des mindestens einen unlöslichen Leuchtstoffes in demselben Lösungsmittel.

7. Leuchtstoffmischung nach einem der vorhergehenden Ansprüche,
**dadurch gekennzeichnet, dass** Lösungsmittel ein Dipolmoment von mindestens 4,0·10⁻³⁰ Cm, bevorzugt mindestens 5,0·10⁻³⁰ Cm aufweist.

8. Leuchtstoffmischung nach einem der vorhergehenden Ansprüche,
**dadurch gekennzeichnet, dass** der mindestens eine lösliche Leuchtstoff als Matrix für den mindestens einen unlöslichen Leuchtstoff dient und/oder eine Barriere und/oder einen Schutz gegenüber Oxidation und Diffusion für den mindestens einen unlöslichen Leuchtstoff darstellt.

9. Verfahren zur Rückgewinnung des mindestens einen löslichen oder unlöslichen Leuchtstoffes aus der Leuchtstoffmischung nach einem der Ansprüche 1 bis 8 umfassend die folgende Verfahrensschritte:
a) Herstellen einer Dispersion aus der Leuchtstoffmischung gemäss Ansprüche 1-8 und dem Lösungsmittel;
b) Trennen der Dispersion in zwei Fraktionen bestehend aus einer den mindestens einen löslichen Leuchtstoff enthaltenden flüssigen Phase und einer den mindestens einen unlöslichen Leuchtstoff enthaltenden festen Phase durch ein mechanisches Trennverfahren.

10. Verfahren nach Anspruch 9, **dadurch gekennzeichnet, dass** das mechanische Trennverfahren ausgewählt ist aus Filtration, Sedimentation, Zentrifugation und Kombinationen hiervon.

11. Verfahren nach einem der Ansprüche 9 oder 10, **dadurch gekennzeichnet, dass** der mindestens eine lösliche Leuchtstoff in einem weiteren, nachgelagerten Verfahrensschritt c1) entweder durch Einengen der Lösung oder durch Ausfällen als feste Phase zurückgewonnen wird und gegebenenfalls durch thermische Nachbehandlung bei einer Temperatur von 50 bis 1500°C pulverförmig mit einer Reinheit von > 99%, bevorzugt > 99,5%, besonders bevorzugt 99,7%, zurückgewonnen wird.

12. Verfahren nach einem der Ansprüche 9 bis 11, **dadurch gekennzeichnet, dass** der mindestens eine unlösliche Leuchtstoff in einem weiteren, nachgelagerten Verfahrensschritt c2) durch Trocknen und/oder durch thermische Nachbehandlung bei einer Temperatur von 50 bis 1500°C pulverförmig mit einer Reinheit von > 99%, bevorzugt > 99,5%, besonders bevorzugt 99,7%, zurückgewonnen wird.

13. Lampe mit einer Leuchtschicht enthaltend die Leuchtstoffmischung nach einem der Ansprüche 1 bis 8.

14. Lampe nach dem vorhergehenden Anspruch, **dadurch gekennzeichnet, dass** die Lampe eine Glühlampe, eine Halogenlampe, eine LED-Lampe, eine Leuchtstoffröhre, eine Kompaktleuchtstofflampe, eine Energiesparlampe, oder eine Gasentladungslampe, insbesondere zur Anwendung in der Leuchtmittelindustrie, im medizinischen Bereich, in Solarien, in Datenerfassungsgeräten, zur Bildwiedergabe, in Gewächshäusern ist.

## Claims

1. Luminophore mixture containing
• at least one soluble, inorganic luminophore containing a host lattice and at least one activator and at least one insoluble luminophore, wherein the at least one insoluble luminophore is selected from the group consisting of organic or organometallic luminophores, doped oxides, sulfides, silicates, selenides, aluminates, phosphates, sulfates, nitrides, halogenides and mixtures thereof, in particular doped BaO, Al₂O₃, MgO, ZnO, Y₂O₃, Y₂SiO, (Ca,Sr,Ba)Si₂N₂O₂, (Y,Gd)BO₃, SrB₄O₇, LaAlO₃, Y₃Al₅O₁₂ (YAG), L_{U3}Al₅O₁₂ (LuAG), Tb₃Al₅O₁₂, GdMgB₅O₁₀, SrAl₁₂O₁₉, YAl₃B₄O₁₂, ZnGa₂O₄, Y(V,P)O₄, Y₂O₂S, ZnS, CaS, CdS, Zn₂SiO₄, (Ca,Sr,Ba)₂SiO₄, BaSi₂O₅, ZnSe, SrAl₂O₄, BaAl₂O₄, BaMgAl₁₀O₁₇ (BAM), (Ce,Tb)MgAl₁₁O₁₉, Sr₄Al₄O₂₅, (Ca,Sr)₅(PO₄)₃(F,Cl), (Ca,Sr,Mg)₃(PO₄)₂, Zn(PO₄)₂, LaPO₄, Sr₂P₂O₇, (Ca,Sr)AlSiN₃, (Ca,Sr,Ba)₂Si₅N₈, KMgF₃, KSiF₆, Mg₄GeO_{5,5}F, BaFCI, BaFBr, YOCl, YOBr, YOF, LaOBr and mixtures thereof,
wherein the solubility of the at least one soluble luminophore is at least greater by a factor of 100 than the solubility of the at least one insoluble luminophore in a polar-protic or a polar-aprotic solvent with a dipole moment of at least 3.0·10⁻³⁰ Cm,
wherein the solubility corresponds to the quotient of the mass of the luminophore and volume of the solvent and
wherein the host lattice is selected from the group consisting of NaCl, NaBr, Nal, KCI, KBr, KI, RbCl, RbBr, Rbl, CsCI, CsBr, Csl, BaCl₂, BaBr₂, Bal₂, SrCl₂, SrBr₂, Srl₂, CaCl₂, CaBr₂, Cal₂, MgCl₂, MgBr₂, MgI₂ and mixtures thereof.

2. The luminophore mixture according to any one of the preceding claims, **characterized in that** the activator is a doping of the host lattice, wherein the doping element is preferably selected from the group consisting of rare earth metals, transition metals, metals from the 3rd, 4th and 5th main group of the periodic table and mixtures thereof.

3. The luminophore mixture according to any one of the preceding claims, **characterized in that** the solvent is selected from the group consisting of water, C1-C6 alcohols, primary C1-C6 amines and secondary C2-C6 amines, primary C1-C6 amides and secondary C2-C6 amides, five to eight-membered lactams, five- to eight-membered lactones, sulfoxides, sulfones, urea derivatives,
preferably has a pH value of 6 to 8,
particularly preferably is selected from the group consisting of water, ethanol and propanol and mixtures thereof.

4. The luminophore mixture according to any one of the preceding claims, **characterized in that** the insoluble luminophore in the visible light spectrum, in particular in the light spectrum with a wavelength of 380 nm to 780 nm, has a quantum yield of at least 10%.

5. The luminophore mixture according to any one of the preceding claims, **characterized in that** the at least one soluble luminophore and the at least one insoluble luminophore can be excited by photons, preferably by photons with an energy of 2.5 bis 1000 eV, for emitting light, preferably for emitting light in the visible spectrum range with a wavelength of 380 nm to 780 nm.

6. The luminophore mixture according to any one of the preceding claims, **characterized in that** the solubility of the at least one soluble luminophore is greater than the solubility of the at least one insoluble luminophore in the same solvent by at least a factor of 150, preferably by at least a factor of 300, particularly preferably by at least a factor of 500.

7. The luminophore mixture according to any one of the preceding claims, **characterized in that** the solvent has a dipole moment of at least 4.0·10⁻³⁰ Cm, preferably a least 5.0·10⁻³⁰ Cm.

8. The luminophore mixture according to any one of the preceding claims, **characterized in that** the at least one soluble luminophore is used as a matrix for the at least one insoluble luminophore and/or is a barrier and/or protection from oxidation and diffusion for the at least one insoluble luminophore.

9. A method for recovering the at least one soluble or insoluble luminophore from the luminophore mixture according to any one of claims 1 to 8 comprising the following method steps:
a) producing a dispersion from the luminophore mixture according to claims 1-8 and the solvent;
b) separating the dispersion into two fractions consisting of a liquid phase containing the at least one soluble luminophore and a solid phase containing at least one insoluble luminophore by a mechanical separation process.

10. The method according to claim 9, **characterized in that** the mechanical separation process is selected from filtration, sedimentation, centrifugation and combinations thereof.

11. The method according to any one of claims 9 or 10, **characterized in that** the at least one soluble luminophore is recovered in a further, downstream method step c1) either by narrowing the solution or by precipitation as solid phase and if necessary is recovered by thermal after-treatment at a temperature of 50 to 1500°C in powder form with a purity of > 99%, preferably > 99.5%, particularly preferably 99.7%.

12. The method according to any one of claims 9 to 11, **characterized in that** the at least one insoluble luminophore is recovered in a further, downstream method step c2) by drying and/or by thermal after-treatment at a temperature of 50 to 1500°C in powder form with a purity of > 99%, preferably > 99.5%, particularly preferably 99.7%.

13. A lamp with a luminescent layer containing the luminophore mixture according to any one of claims 1 to 8.

14. The lamp according to the preceding claim, **characterized in that** the lamp is an incandescent lamp, a halogen lamp, an LED lamp, a fluorescent tube, a compact fluorescent lamp, an energy-saving lamp, or a gas discharge lamp, in particular for use in the lighting industry, in the medical field, in solariums, in data acquisition devices, for image reproduction, in greenhouses.

## Revendications

1. Mélange de substances luminescentes contenant
• au moins une substance luminescente inorganique soluble contenant un réseau hôte et au moins un activateur et au moins une substance luminescente insoluble, dans lequel la au moins une substance luminescente insoluble est choisie dans le groupe constitué par des substances luminescentes organiques ou organométalliques, des oxydes dopés, des sulfures, des silicates, des séléniures, des aluminates, des phosphates, des sulfates, des nitrures, des halogénures et des mélanges de ceux-ci, en particulier BaO, Al₂O₃, MgO, ZnO, Y₂O₃, Y₂SiO, (Ca,Sr,Ba)Si₂N₂O₂, (Y,Gd)BO₃, SrB₄O₇, LaAlO₃, Y₃Al₅O₁₂ (YAG), L_{U3}Al₅O₁₂ (LuAG), Tb₃Al₅O₁₂, GdMgB₅O₁₀, SrAl₁₂O₁₉, YAl₃B₄O₁₂, ZnGa₂O₄, Y(V,P)O₄, Y₂O₂S, ZnS, CaS, CdS, Zn₂SiO₄, (Ca,Sr,Ba)₂SiO₄, BaSi₂O₅, ZnSe, SrAl₂O₄, BaAl₂O₄, BaMgAl₁₀O₁₇ (BAM), (Ce,Tb)MgAl₁₁O₁₉, Sr₄Al₄O₂₅, (Ca,Sr)₅(PO₄)₃(F,Cl), (Ca,Sr,Mg)₃(PO₄)₂, Zn(PO₄)₂, LaPO₄, Sr₂P₂O₇, (Ca,Sr)AlSiN₃, (Ca,Sr,Ba)₂Si₅N₈, KMgF₃, KSiF₆, Mg₄GeO_{5,5}F, BaFCI, BaFBr, YOCl, YOBr, YOF, LaOBr dopés et des mélanges de ceux-ci,
dans lequel la solubilité de la au moins une substance luminescente soluble est supérieure d'au moins un facteur 100 à la solubilité de la au moins une substance luminescente insoluble dans un solvant polaire-protique ou polaire-aprotique avec un moment dipolaire d'au moins 3,0·10⁻³⁰ Cm,
dans lequel la solubilité correspond au quotient de la masse de la substance luminescente et du volume du solvant et
dans lequel le réseau hôte est choisi dans le groupe constitué par NaCl, NaBr, Nal, KCI, KBr, Kl, RbCI, RbBr, Rbl, CsCI, CsBr, Csl, BaCl₂, BaBr₂, Bal₂, SrCl₂, SrBr₂, Srl₂, CaCl₂, CaBr₂, Cal₂, MgCl₂, MgBr₂, MgI₂ et des mélanges de ceux-ci.

2. Mélange de substances luminescentes selon l'une quelconque des revendications précédentes, **caractérisé en ce que** l'activateur est un dopant de la grille hôte, dans lequel l'élément dopant est de préférence choisi dans le groupe constitué par les métaux des terres rares, les métaux de transition, les métaux du 3ème, 4ème et 5ème groupe principal du tableau périodique et des mélanges de ceux-ci.

3. Mélange de substances luminescentes selon l'une quelconque des revendications précédentes, **caractérisé en ce que** le solvant est choisi dans le groupe constitué par l'eau, les alcools en C1-C6, les amines primaires en C1-C6 et les amines secondaires en C2-C6, les amides primaires en C1-C6 et les amides secondaires en C2-C6, les lactames à cinq à huit chaînons, les lactones à cinq à huit chaînons, les sulfoxydes, les sulfones, les dérivés de l'urée,
présente de préférence un pH de 6 à 8,
de manière particulièrement préférée est choisi dans le groupe constitué par l'eau, l'éthanol et le propanol et des mélanges de ceux-ci.

4. Mélange de substances luminescentes selon l'une quelconque des revendications précédentes, **caractérisé en ce que** la substance luminescente insoluble présente un rendement quantique d'au moins 10 % dans le domaine de la lumière visible, en particulier dans le domaine de la lumière de longueur d'onde de 380 nm à 780 nm.

5. Mélange de substances luminescentes selon l'une quelconque des revendications précédentes, **caractérisé en ce que** la au moins une substance luminescente soluble et la au moins une substance luminescente insoluble peuvent être excitées par des photons, de préférence par des photons d'une énergie de 2,5 à 1000 eV, pour émettre de la lumière, de préférence pour émettre de la lumière dans le domaine visible du spectre avec une longueur d'onde de 380 nm à 780 nm.

6. Mélange de substances luminescentes selon l'une quelconque des revendications précédentes, **caractérisé en ce que** la solubilité de la au moins une substance luminescente soluble est supérieure d'au moins un facteur 150, de préférence d'au moins un facteur 300, de manière particulièrement préférée d'au moins un facteur 500 à la solubilité de la au moins une substance luminescente insoluble dans le même solvant.

7. Mélange de substances luminescentes selon l'une quelconque des revendications précédentes, **caractérisé en ce que** le solvant présente un moment dipolaire d'au moins 4,0·10⁻³⁰ Cm, de préférence d'au moins 5,0·10⁻³⁰ Cm.

8. Mélange de substances luminescentes selon l'une quelconque des revendications précédentes, **caractérisé en ce que** la au moins une substance luminescente soluble sert de matrice à la au moins une substance luminescente insoluble et/ou constitue une barrière et/ou une protection contre l'oxydation et la diffusion pour la au moins une substance luminescente insoluble.

9. Procédé de récupération de la au moins une substance luminescente soluble ou insoluble à partir du mélange de substances luminescentes selon l'une quelconque des revendications 1 à 8, comprenant les étapes de procédé suivantes :
a) la préparation d'une dispersion à partir du mélange de substances luminescentes selon les revendications 1 à 8 et du solvant ;
b) la séparation de la dispersion en deux fractions constituées d'une phase liquide contenant la au moins une substance luminescente soluble et d'une phase solide contenant la au moins une substance luminescente insoluble par un procédé de séparation mécanique.

10. Procédé selon la revendication 9, **caractérisé en ce que** le procédé de séparation mécanique est choisi parmi la filtration, la sédimentation, la centrifugation et des combinaisons de celles-ci.

11. Procédé selon l'une quelconque des revendications 9 ou 10, **caractérisé en ce que** la au moins une substance luminescente soluble est récupérée dans une autre étape de procédé c1) en aval, soit par concentration de la solution, soit par précipitation sous forme de phase solide, et est éventuellement récupérée sous forme de poudre avec une pureté > 99 %, de préférence > 99,5 %, de manière particulièrement préférée de 99,7 % par traitement thermique ultérieur à une température de 50 à 1500 °C.

12. Procédé selon l'une quelconque des revendications 9 à 11, **caractérisé en ce que** la au moins une substance luminescente insoluble est récupérée dans une autre étape de procédé c2) en aval, sous forme de poudre avec une pureté > 99 %, de préférence > 99,5 %, de manière particulièrement préférée de 99,7 % par séchage et/ou par traitement thermique ultérieur à une température de 50 à 1500 °C.

13. Lampe avec une couche luminescente contenant le mélange de substances luminescentes selon l'une quelconque des revendications 1 à 8.

14. Lampe selon la revendication précédente, **caractérisée en ce que** la lampe est une lampe à incandescence, une lampe halogène, une lampe à DEL, un tube fluorescent, une lampe fluorescente compacte, une lampe à économie d'énergie, ou une lampe à décharge de gaz, en particulier pour l'utilisation dans l'industrie de l'éclairage, dans le domaine médical, dans les solariums, dans les appareils de saisie de données, pour la reproduction d'images, dans les serres.
